# EUROPÄISCHE PATENTANMELDUNG

(11) **EP 1 111 305 A1**
(43) Veröffentlichungstag der Anmeldung: **27.06.2001**
(21) Anmeldenummer: 00127052.9
(22) Anmeldetag: 11.12.2000
(51) Int. Cl.: F23G 5/16, F23G 5/20, F23L 7/00

(54) **Verfahren zur thermischen Behandlung von Rostasche aus Müllverbrennungsanlagen**

(30) Priorität: 20.12.1999 DE 19961384
(71) Anmelder: ALSTOM Power (Schweiz) AG, 5400 Baden (CH)
(72) Erfinder: Carcer, Bruno, 5000 Aarau (CH); Rüegg, Hans, 5610 Wohlen (CH); Wieckert, Christian, 5703 Seon (CH); Selinger, Adrian, 5408 Ennetbaden (CH)

(57) **Zusammenfassung**

Die Erfindung betrifft ein Verfahren und eine Vorrichtung zur thermischen Behandlung von Rostasche (12) aus Müllverbrennungsanlagen mit einem Verbrennungsraum (5) und einem Schlackenschacht (7), wobei die Rostasche (12) aus der Müllverbrennungsanlage in ein Drehrohr (10) geleitet und dort mittels eines Brennstoffes (20), der mit Sauerstoff oder sauerstoffangereicherter Luft (19) umgesetzt wird, thermisch behandelt wird. Die Erfindung ist dadurch gekennzeichnet, dass die Rostasche (12) über eine Zufuhreinrichtung (15) direkt vom Schlackenschacht (7) in das Drehrohr (10) geleitet wird und die bei der thermischen Behandlung im Drehrohr (10) entstehenden Abgase (14) in den Verbrennungsraum (5) der Müllverbrennungsanlage zurückgeleitet und mit den Abgasen (22) der Müllverbrennung zusammengeführt werden.

## Beschreibung

### Technisches Gebiet

Die Erfindung bezieht sich auf das Gebiet der Müllverbrennung. Sie betrifft ein Verfahren zur thermischen Behandlung von Rostasche aus Müllverbrennungsanlagen nach dem Oberbegriff des Patentanspruches 1, sowie eine Vorrichtung zur Durchführung des Verfahrens.

### Stand der Technik

Es sind eine Reihe von verschiedenen Verfahren zur thermischen Behandlung von Rostaschen aus Müllverbrennungsanlagen bekannt, beispielsweise aus EP 0 372 039 B1 oder EP 0 394 391 B2.

Bei all diesen Verfahren wird die Rostasche durch eine Austragsvorrichtung nass, teilweise trocken oder trocken aus der Müllverbrennungsanlage ausgetragen und nachträglich in einem zweiten Schritt der erneuten thermischen Behandlung, beispielsweise in einem Drehrohr oder einem drehenden liegenden Konverter, unterzogen. Der Austrag, ggf. die Zwischenlagerung, der erneute Eintrag beim zweiten Behandlungsschritt und die Reinigung des aus diesem Schritt erzeugten Rauchgases verursachen Kosten, welche die Rentabilität eines solchen Verfahrens bis jetzt verhindert haben. Die Qualitätsverbesserung, welche mit der Behandlung erzielt werden kann, wird durch die hohen Behandlungskosten überkompensiert, so dass sich die genannten Verfahren bisher nicht kommerziell durchsetzen konnten.

### Darstellung der Erfindung

Der Erfindung liegt die Aufgabe zugrunde, ein Verfahren zur thermischen Behandlung von Rostasche aus Müllverbrennungsanlagen zu entwickeln, welches sich gegenüber den bekannten Verfahren durch kürzere Behandlungszeiten und niedrigere Behandlungskosten auszeichnet. Es ist weiterhin Ausgabe der Erfindung, eine kostengünstige Vorrichtung zur Durchführung der Verfahren zu schaffen.

Erfindungsgemäss wird dies bei einem Verfahren nach dem Oberbegriff des Patentanspruches 1 dadurch erreicht, dass die Rostasche über eine Zufuhreinrichtung direkt, d. h. ohne vorherigen Austrag aus der Müllverbrennungsanlage, ohne Zwischenlagerung und ohne erneuten Eintrag in die weitere Behandlungsvorrichtung, vom Schlackenschacht in das Drehrohr geleitet wird und die bei der thermischen Behandlung im Drehrohr entstehenden Abgase in den Verbrennungsraum der Müllverbrennung zurückgeleitet und mit den Abgasen der Müllverbrennung zusammengeführt werden.

Erfindungsgemäss wird dies bei einer Vorrichtung, bestehend aus einer Müllverbrennungsanlage mit Schlackenschacht und Entschlacker und einem Drehrohr zur thermischen Behandlung der Rostasche, dadurch erreicht, dass das Drehrohr mit seiner Stirnwand seitlich direkt an den Schlackenschacht der Müllverbrennungsanlage angeflanscht ist, wobei in der angeflanschten Seite des Drehrohres Öffnungen zur Zufuhr der Rostasche und zur Abfuhr der Abgase vorgesehen sind, und im Schlackenschacht der Müllverbrennungsanlage eine Zufuhreinrichtung für die Rostasche in das Drehrohr angeordnet ist.

Die Vorteile der Erfindung bestehen darin, dass die Behandlungskosten und die Behandlungszeit drastisch gesenkt werden, weil einerseits keine Zwischenschritte für die Behandlung der Rostasche mehr notwendig sind und andererseits durch die Rückführung der Abgase aus dem Drehrohr in die Müllverbrennungsanlage eine Reinigung des bei der thermischen Behandlung entstehenden Rauchgases entfallen kann. Zusätzlich kann ein Grossteil der im Drehrohr freigesetzten Energie über den Abhitzekessel der Müllverbrennungsanlage rückgewonnen werden.

Es ist zweckmässig, wenn die Zufuhreinrichtung eine bewegliche Klappe ist, welche im geöffneten Zustand eine Notentleerung der gesamtem Rostasche und gegebenenfalls teil- bzw. unverbrannten Mülls, welcher sich auf dem Verbrennungsrost befindet, über den konventionellen Weg des Schlackenschachtes und des Entschlacker erlaubt. Dadurch wird vorteilhaft die Verfügbarkeit der Müllverbrennungsanlage nicht beeinflusst.

Ausserdem ist es vorteilhaft, wenn die Rostasche im Schlackenschacht vor Eintritt in das Drehrohr in mindestens zwei Fraktionen unterschiedlicher Korngrösse aufgeteilt wird, wovon nur eine Fraktion, vorzugsweise die feinere, thermisch behandelt wird und die mindestens eine andere Fraktion ausgetragen wird. Zu diesem Zwecke ist im Schlackenschacht vor dem Drehrohr mindestens ein Trennaggregat zur Trennung der Rostasche in mindestens zwei Fraktionen angeordnet. Das nicht nutzbare Überkorn wird dann über den Schlackenschacht und den Entschlacker ausgetragen. Das hat den Vorteil, dass grosse, eventuell sperrige und nur langsam aufschmelzende Teile nicht in das Drehrohr gelangen, sondern separat ausgetragen werden und zusätzlich noch vor der Extraktion im Entschlacker ausgekühlt werden.

Von besonderem Vorteil ist es, wenn im Drehrohr zusätzlich zur Rostasche mindestens ein Teil der Flugasche thermisch behandelt wird. Dadurch reduziert sich die Menge der zu deponierenden Reststoffe, was zu enormen Kostenvorteilen führt.

Weiterhin ist es zweckmässig, wenn der für die thermische Behandlung der Rostasche eingesetzte Brennstoff zumindest teilweise ein Abfallstoff (z.B. Klärschlamm) ist, weil dies kostengünstig ist. Wird der Brennstoff zumindest teilweise über den Brenner zugegeben, so hat das den Vorteil, dass eine gezielte Wärmeentbindung stattfinden kann. So kann die Schmelzleistung optimiert werden.

Ausserdem ist es zweckmässig, den Brennstoff in stückiger Form zuzugeben, weil dies folgenden Vorteil hat:

Der Brennstoff reichert sich an der Oberfläche des Schmelzbades an und führt zu zwei gewünschten Effekten. Zum ersten bildet sich auf dem Schmelzbad eine Schicht mit noch nachverbrennenden Teilen, welche mit optimalem Wärmeübergang ins Schmelzbad einwirken. Weiter führt diese Schicht zu einem lokalen Sauerstoffdefizit, welches in der Schmelze zu reduzierenden Bedingungen führt, welche bekanntlich die Austreibung der Schwermetalle begünstigt.

Es ist vorteilhaft, das Drehrohr entweder zumindest teilweise unterstöchiometrisch oder überstöchiometrisch zu betreiben. Beim unterstöchiometrischen Betrieb wird ein Grossteil der Schwermetalle aus der Rostasche entfernt. Beim überstöchiometrischen Betrieb hingegen wird anstelle der Austreibung der Schwermetalle die möglichst effiziente Einschmelzung, d.h. die Schmelzleistung gewichtet.

Von Vorteil ist es, wenn die Rostasche im Drehrohr geschmolzen wird und anschliessend noch schmelzflüssig zu einem verwertbaren Produkt weiterverarbeitet wird, wobei das geschmolzene Metall durch eine seitlich im Drehrohr befindliche Öffnung abgelassen wird und somit einer Wiederverwertung zugeführt werden kann. Die schmelzflüssige Rostasche selbst kann beispielsweise dann zu einem Schaumprodukt verarbeitet werden und z. B. als Isolationsmaterial im Hoch- und Tiefbau eingesetzt werden.

Denkbar ist auch eine thermische Behandlung der Rostasche im Drehrohr unterhalb des Schmelzpunktes der Rostasche. Dies hat bei einer weniger restriktiver Gesetzgebung den Vorteil, dass ein Grossteil der in der Schlacke befindlichen Schwermetalle ausgetrieben werden kann, ohne dass die höheren Energiemengen, welche für das Schmelzen nötig sind, aufgewendet werden müssen.

Vorteilhaft ist, wenn das Drehrohr gekühlt wird und die Wärme aus dem Kühlprozess zumindest teilweise zurückgewonnen wird. Dadurch können die Behandlungskosten noch weiter gesenkt werden.

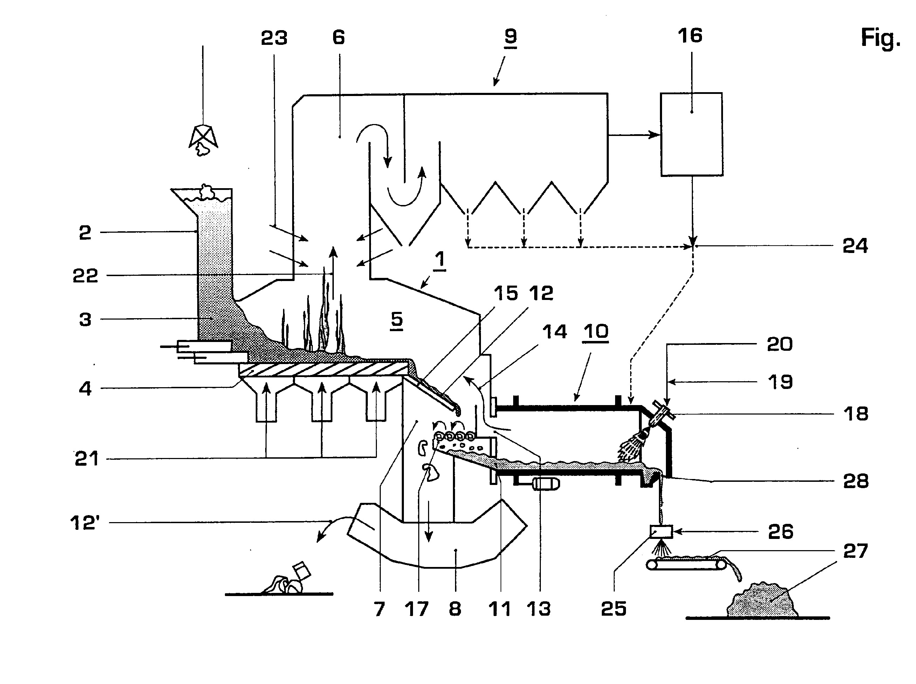

### Kurze Beschreibung der Zeichnung

In der Zeichnungen ist ein Ausführungsbeispiel der Erfindung schematisch dargestellt.

Die einzige Figur zeigt einen Müllverbrennungsofen mit einem gemäss der Erfindung angeflanschten Drehrohr zur thermischen Behandlung der Rostasche.

Es sind nur die für das Verständnis der Erfindung wesentlichen Elemente gezeigt.

### Weg zur Ausführung der Erfindung

Nachfolgend wird die Erfindung anhand eines Ausführungsbeispieles und der Zeichnung näher erläutert.

Die einzige Figur zeigt schematisch einen bekannten Müllverbrennungsofen 1 mit Zuteilschacht 2 für den Müll 3, Verbrennungsrost 4, Verbrennungsraum 5, Sekundärbrennkammer 6, Schlackenschacht 7 und Entschlacker 8. An den Müllverbrennungsofen 1 ist abgasseitig im Anschluss an die Sekundärbrennkammer 6 ein Abhitzekessel 9 angeordnet. Stromabwärts schliesst sich an den Abhitzekessel 9 eine Filteranlage 16 an, beispielsweise ein Elektrofilter. Insoweit sind Müllverbrennungsanlagen bekannter Stand der Technik.

Erfindungsgemäss ist nun an den Schlackenschacht 7 ein Drehrohrofen 10 angeflanscht. Das Drehrohr 10 weist an seiner angeflanschten Seite Öffnungen 11 zur Zufuhr der Rostasche 12 aus dem Müllverbrennungsofen 1 und Öffnungen 13 zur Abfuhr der Abgase 14 aus dem Drehrohr 10 auf. Ausserdem ist im Schlackenschacht 7 des Müllverbrennungsofens 1 eine Zufuhreinrichtung 15 für die Rostasche 12 in das Drehrohr 10 angeordnet. Diese Zufuhreinrichtung 15 ist im vorliegenden Ausführungsbeispiel eine bewegliche Klappe, welche im geöffneten Zustand eine Notentleerung der gesamtem Rostasche 12 und gegebenenfalls teil- bzw. unverbrannten Mülls 3 über den Schlackenschacht 7 und den Entschlacker 8 erlaubt und im geschlossenen Zustand einen direkten Durchtritt der Rostasche 12 in den Entschlacker 8 verhindert. Der Entschlacker 8 ist im vorliegenden Ausführungsbeispiel ein als Nassentschlacker arbeitender Stösselentschlacker. Im Schlackenschacht 7 ist ausserdem vor dem Drehrohr 10 mindestens ein Trennaggregat 17 zur Trennung der Rostasche 12 in mindestens zwei Fraktionen angeordnet. Das Drehrohr 10 ist mit einem Brenner 18 bestückt, welcher mit Sauerstoff bzw. sauerstoffangereicherter Luft 19 und einem Brennstoff 20 (hier getrockneter Klärschlamm) betrieben wird. Dadurch, dass der Brennstoff 20 über den Brenner 18 zugegeben wird, kann vorteilhaft eine Wärmeentbindung stattfinden und die Schmelzleistung optimiert werden. Als Stützbrennstoffe 20 für die thermische Behandlung der Rostasche 12 im Drehrohr 10 können neben Klärschlamm auch Koks, Kohle, Öl, Gas oder Mischungen aus diesen Stoffen verwendet werden.

In einem anderen Ausführungsbeispiel wird der Brennstoff 20 in stückiger Form in das Drehrohr 10 eingebracht. In diesem Falle reichert sich der Brennstoff 20 an der Oberfläche des Schmelzbades an. Dort bildet sich eine Schicht mit noch nachverbrennenden Teilen, welche mit optimalem Wärmeübergang ins Schmelzbad einwirken. Ausserdem führt diese Schicht zu einem lokalen Sauerstoffdefizit, welches in der Schmelze zu reduzierenden Bedingungen führt, die die Austreibung der Schwermetalle begünstigen.

Müll 3 wird über den Zuteilschacht 2 auf den Verbrennungsrost 4 des Müllverbrennungsofens 1 aufgegeben und unter Zufuhr von Primärluft 21 verbrannt. Ein nahezu vollständiger Ausbrand der dabei entstehenden Rauchgase 22 wird in der Sekundärbrennkammer 6 durch Zufuhr von Sekundärluft 23 erreicht. Die Rauchgase 22 werden in den Abhitzekessel 9 und anschliessend in die Filteranlage 16 geleitet, wobei sie abgekühlt und vom Flugstaub 24 gereinigt werden.

Die bei der Verbrennung entstehende Rostasche 12 wird über eine Zufuhreinrichtung 15, hier eine Umlenkklappe, auf das Trennaggregat 17, im vorliegenden Ausführungsbeispiel einen Siebförderrost, aufgebracht. Dort wird eine Fraktion ca. < 100 mm abgesiebt und über eine Rutsche und die Öffnung 11 in das an den Schlackenschacht 7 angeflanschte Drehrohr 10 übergeleitet. Die Grobfraktion der Rostasche > 100 mm (Überkorn 12') wird dagegen konventionell über den Schlackenschacht 7 und den Nassentschlacker 8 nass ausgetragen.

Die in das Drehrohr 10 eintretende Feinfraktion der stückigen Rostasche 12 und gegebenenfalls ein Teil der Flugasche 24, welcher ebenfalls dem Drehrohr 10 zugeführt wird (siehe gestrichelte Linie in der Figur) wird unter Zuhilfenahme von Klärschlamm 20, welcher mit Sauerstoff 19 verbrannt wird, aufgeschmolzen und durch unterstöchiometrische Bedingungen im Drehrohr 10 von einem Grossteil seiner Schwermetalle befreit. Das so erzeugte Glas wird über einen Überlauf 28 des Drehrohres 10 kontinuierlich ausgetragen und in einem Glasschäumer 25 mit Hilfe eines zugeführten Schäumungsmittels 26 zu einem Glasschaum 27 aufgeschäumt. Der Glasschaum 27 wird auf einer Halde gesammelt und kann z. B. im Hoch- oder Tiefbau als Isolationsmaterial eingesetzt werden. Die im Drehrohr 10 aufgeschmolzenen Metalle werden über eine seitlich am Drehrohr 10 angebrachte Ausgussöffnung (nicht dargestellt) ausgetragen und können recycliert werden.

Die bei der thermischen Behandlung der Rostasche 12 bzw. Flugasche 24 entstandenen Rauchgase werden über einen in der Drehrohrstirnwand befindlichen Rückführkanal 13 in den Schlackenschacht 7 der Müllverbrennungsanlage geleitet und von dort den restlichen Verbrennungsgasen 22 der Müllverbrennungsanlage zugeführt, mit diesen zusammen in der Sekundärbrennkammer 6 nachverbrannt, im Abhitzekessel 9 rückgekühlt und im Filter 16 gereinigt.

Dadurch, dass die Rostasche 12 direkt aus dem Schlackenschacht 7 in das am Schlackenschacht 7 angeflanschte Drehrohr 10 gebracht wird und das bei der thermischen Behandlung entstehenden Rauchgas direkt wieder in den Verbrennungsraum der Müllverbrennungsanlage zurückströmt, können bei dem erfindungsgemässen Verfahren gegenüber dem bekannten Stand der Technik die Behandlungskosten drastisch gesenkt werden. Da zusätzlich Teile der Flugasche mitbehandelt werden können, ergeben sich weitere Kostenvorteile.

Selbstverständlich ist die Erfindung nicht auf das beschriebene Ausführungsbeispiel beschränkt. So kann z. B. die thermische Behandlung der Rostasche im Drehrohr auch unterhalb der Schmelztemperatur der Rostasche erfolgen. Zusätzliche Vorteile ergeben sich, wenn das Drehrohr gekühlt wird und die Wärme aus dem Kühlprozess zumindest teilweise rückgewonnen wird.

### Bezugszeichenliste

- 1: Müllverbrennungsofen
- 2: Zuteilschacht
- 3: Müll
- 4: Verbrennungsrost
- 5: Verbrennungsraum
- 6: Sekundärbrennkammer
- 7: Schlackenschacht
- 8: Entschlacker
- 9: Abhitzekessel
- 10: Drehrohr
- 11: Öffnung zur Zufuhr von Pos. 12 in Pos. 10
- 12: Rostasche, 12' Überkorn von Pos. 12
- 13: Öffnung bzw. Rückführkanal zur Abfuhr von Pos. 14 aus Pos. 10
- 14: Abgas aus Pos. 10
- 15: Zufuhreinrichtung für Pos. 12 in Pos. 10
- 16: Filteranlage
- 17: Trennaggregat
- 18: Brenner
- 19: Sauerstoff bzw. sauerstoffangereicherte Luft
- 20: Brennstoff
- 21: Primärluft
- 22: Rauchgase in Pos. 5
- 23: Sekundärluft
- 24: Flugstaub
- 25: Glasschäumer
- 26: Schäumungsmittel
- 27: Glasschaum
- 28: Überlauf von Pos. 10

## Patentansprüche

1. Verfahren zur thermischen Behandlung von Rostasche (12) aus Müllverbrennungsanlagen mit einem Verbrennungsraum (5) und einem Schlackenschacht (7), wobei die Rostasche aus der Müllverbrennungsanlage in ein Drehrohr (10) geleitet und dort mittels eines Brennstoffes (20), der mit Sauerstoff oder sauerstoffangereicherter Luft (19) umgesetzt wird, thermisch behandelt wird, dadurch gekennzeichnet, dass die Rostasche (12) über eine Zufuhreinrichtung (15) direkt vom Schlackenschacht (7) in das Drehrohr (10) geleitet wird und die bei der thermischen Behandlung im Drehrohr (10) entstehenden Abgase (14) in den Verbrennungsraum (5) der Müllverbrennungsanlage zurückgeleitet und mit den Abgasen (22) der Müllverbrennung zusammengeführt werden.

2. Verfahren nach Anspruch 1, dadurch gekennzeichnet, dass die Rostasche (12) im Schlackenschacht (7) vor Eintritt in das Drehrohr (10) in mindestens zwei Fraktionen unterschiedlicher Korngrösse aufgeteilt wird, wovon nur eine Fraktion, vorzugsweise die feinere, thermisch behandelt wird und die mindestens eine andere Fraktion ausgetragen wird.

3. Verfahren nach Anspruch 1, dadurch gekennzeichnet, dass der für die thermische Behandlung eingesetzte Brennstoff (20) zumindest teilweise ein Abfallstoff ist.

4. Verfahren nach Anspruch 1 oder 4, dadurch gekennzeichnet, dass der Brennstoff (20) zumindest teilweise in stückiger Form zugegeben wird.

5. Verfahren nach Anspruch 1, 4 oder 5 dadurch gekennzeichnet, dass der Brennstoff (20) zumindest teilweise über einen Brenner (18) zugegeben wird.

6. Verfahren nach einem der Ansprüche 1 bis 5, dadurch gekennzeichnet, dass das Drehrohr (10) zumindest teilweise unterstöchiometrisch betrieben wird.

7. Verfahren nach einem der Ansprüche 1 bis 5, dadurch gekennzeichnet, dass das Drehrohr (10) zumindest teilweise überstöchiometrisch betrieben wird.

8. Verfahren nach einem der Ansprüche 1 bis 7, dadurch gekennzeichnet, dass die Rostasche (12) im Drehrohr (10) geschmolzen wird und anschliessend noch schmelzflüssig zu einem verwertbaren Produkt, vorzugsweise einem Glasschaum (27), weiterverarbeitet wird.

9. Verfahren nach Anspruch 8, dadurch gekennzeichnet, dass geschmolzenes Metall durch eine seitlich im Drehrohr (10) befindliche Öffnung abgelassen wird.

10. Verfahren nach einem der Ansprüche 1 bis 7, dadurch gekennzeichnet, dass die thermische Behandlung der Rostasche (12) unterhalb des Schmelzpunktes der Rostasche (12) durchgeführt wird.

11. Verfahren nach einem der Ansprüche 1 bis 10, dadurch gekennzeichnet, dass das Drehrohr (10) gekühlt wird und die Wärme aus dem Kühlprozess zumindest teilweise zurückgewonnen wird.

12. Verfahren nach einem der Ansprüche 1 bis 11, dadurch gekennzeichnet, dass im Drehrohr (10) zusätzlich mindestens ein Teil der Flugasche (24) thermisch behandelt wird.

13. Vorrichtung zur Durchführung des Verfahrens nach einem der Ansprüche 1 bis 11, bestehend aus einer Müllverbrennungsanlage mit Schlackenschacht (7) und Entschlacker (8) und einem Drehrohr (10) zur thermischen Behandlung der Rostasche (12), dadurch gekennzeichnet, dass das Drehrohr (10) mit seiner Stirnwand seitlich direkt an den Schlackenschacht (7) der Müllverbrennungsanlage angeflanscht ist, wobei an der angeflanschten Stirnwand des Drehrohres (10) eine Öffnung (11) zur Zufuhr der Rostasche (12) und eine Öffnung (13) zur Abfuhr der Abgase (14) vorgesehen sind, und im Schlackenschacht (7) der Müllverbrennungsanlage eine Zufuhreinrichtung (15) für die Rostasche (12) in das Drehrohr (10) angeordnet ist.

14. Vorrichtung nach Anspruch 13, dadurch gekennzeichnet, dass die Zufuhreinrichtung (15) eine bewegliche Klappe ist, welche im geöffneten Zustand eine Notentleerung der gesamtem Rostasche (12) über den Entschlacker (8) erlaubt und im geschlossenen Zustand einen direkten Durchtritt der Rostasche (12) in den Entschlacker (8) verhindert.

15. Vorrichtung nach Anspruch 13, dadurch gekennzeichnet, dass im Schlackenschacht (7) vor dem Drehrohr (10) mindestens ein Trennaggregat (17) zur Trennung der Rostasche (12) in mindestens zwei Fraktionen angeordnet ist.
